# EUROPEAN PATENT APPLICATION

(11) **EP 2 075 795 A1**
(43) Date of publication of application: **01.07.2009**
(21) Application number: 08170675.6
(22) Date of filing: 04.12.2008
(51) Int. Cl.: G11B 27/00, H04N 5/783, G11B 27/32

(54) **Display apparatus and control method thereof**

(30) Priority: 28.12.2007 KR 20070140645
(71) Applicant: Samsung Electronics Co., Ltd., Seoul 442-742 (KR)
(72) Inventor: Jeon, Nam-jae, Gyeonggi-do (KR); Kim, Je-ik, Gyeonggi-do (KR)
(74) Representative: Robinson, Ian Michael

(57) **Abstract**

A method of controlling a display apparatus, the method includes: receiving a transport stream (TS11-13) comprising payload unit start identification (PUSI) information in header information; storing the transport stream (TS11-13); checking frame information of a transport stream (TS11-13) by descrambling a transport stream (TS11-13) if a screen searching function is selected and then the PUSI information is of '1,'; and processing and displaying the transport stream (TS11-13) if the frame information corresponds to a preset reference frame.

## Description

### BACKGROUND OF THE INVENTION

### Field of the Invention

In general, the present invention relates to a display apparatus and a control method thereof, and more particularly, to a display apparatus capable of supporting a personal video recorder (PVR) function that records and plays back a video signal, and a control method thereof.

### Description of the Related Art

A PVR is a device that records a video signal in a hard disk drive (HDD) or other medium and plays it back. As compared with a video cassette recorder (VCR) employing a magnetic tape for recording a video signal, the PVR uses the HDD for recording the video signal. The amount of the video signal to be recorded corresponding to a predetermined time is determined according to the capacity of the HDD.

When a channel for broadcasting is selected, the PVR automatically or manually records a video signal, corresponding to a digital broadcasting signal, in the HDD. Such a PVR provides various additional functions as well as the basic recording function. One of the additional functions is a screen searching function for searching a screen while playing back the stored video signal at high speed. The screen searching function includes a fast-forward function to play back the stored video signal forward at high speed, and a rewind function to play back the stored video signal in a reverse direction at high speed. Through such a high speed playback function, a user can select the video signal to be played back at a desired point of time.

In a digital broadcast, the video signal is transmitted as it is compressed. Since the compressed video signal is based on moving picture experts group (MPEG) standards, which uses a correlation between pictures, there is a problem of playing back the video signal searched by the screen searching function independently of the correlated video signals.

Thus, a conventional display apparatus checks frame information of a video signal and stores an address, in which a video signal of an intra-coded (I) frame is stored, as index information along with the video signal. Then, when a user selects the screen searching function, the display apparatus processes and plays back the video signals having the I frame in sequence with reference to the index information.

However, if the display apparatus receives a scrambled video signal that can be unscrambled only by authorized users, it is impossible to check the frame information of the video signal. Therefore, the display apparatus cannot generate the index information about the video signal, and thus the screen searching function is not enabled.

### SUMMARY OF THE INVENTION

According to the present invention there is provided a display apparatus and a control method thereof as set forth in the appended claims. Other features of the invention will be apparent from the dependent claims, and the description which follows.

An exemplary aspect of the present invention provides a display apparatus and a control method thereof, in which a screen searching function can be applied to even a scrambled video signal.

Another exemplary aspect provides a display apparatus and a control method thereof, in which index information is generated on the basis of payload unit start identification (PUSI) information included in header information of a video signal, and frame information is determined with reference to the index information.

In one exemplary aspect there is provided a method of controlling a display apparatus, the method comprising: receiving a transport stream comprising payload unit start identification (PUSI) information; storing the transport stream; checking frame information of the transport stream by descrambling the transport stream if the PUSI information is '1' and a screen searching function is selected; and processing and displaying the transport stream if the frame information corresponds to a preset reference frame.

The method may further comprise generating and storing an address, in which the transport stream having the PUSI information of '1' is stored, as index information, wherein the checking the frame information comprises descrambling the transport stream based on the index information.

The reference frame may comprise an intra-coded frame.

The method may further comprise setting a searching speed of the screen searching function.

The method may further comprise setting the reference frame depending on the searching speed.

In one exemplary aspect there is provided a display apparatus comprising: a receiving unit which receives a transport stream comprising payload unit start identification (PUSI) information; a storage unit which stores the transport stream; a processing unit which descrambles the transport stream if the transport stream is scrambled; and a controller which controls the processing unit to descramble the transport stream if the PUSI information is '1' and a screen searching function is selected, and to process the transport stream if the frame information of the transport stream corresponds to a preset reference frame.

The controller may control the processing unit to generate an address, in which the transport stream having the PUSI information of '1' is stored, as index information; may store the index information in the storage unit; and may control the processing unit to descramble the transport stream based on the index information.

The reference frame may comprise an intra-coded frame.

The display apparatus may further comprise a user input unit for setting a searching speed of the screen searching function.

The controller may set the reference frame depending on the searching speed set up through the user input unit.

The controller may set the intra-coded frame as the reference frame if the searching speed is a normal speed, and may set a predictive-coded frame as the reference frame if the searching speed is equal to or higher than a double speed.

### BRIEF DESCRIPTION OF THE DRAWINGS

The above and/or other exemplary aspects of the present invention will become apparent and more readily appreciated from the following description of exemplary embodiments, taken in conjunction with the accompanying drawings, in which:
FIG. 1 is a control block diagram of a display apparatus according to an exemplary embodiment of the present invention;
FIG. 2 illustrates a structure of a transport steam according to an exemplary embodiment of the present invention;
FIG. 3 illustrates a transport stream and information about a transport stream stored in a storage unit of a display apparatus according to an exemplary embodiment of the present invention; and
FIG. 4 is a control flowchart of a display apparatus according to an exemplary embodiment of the present invention.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout.

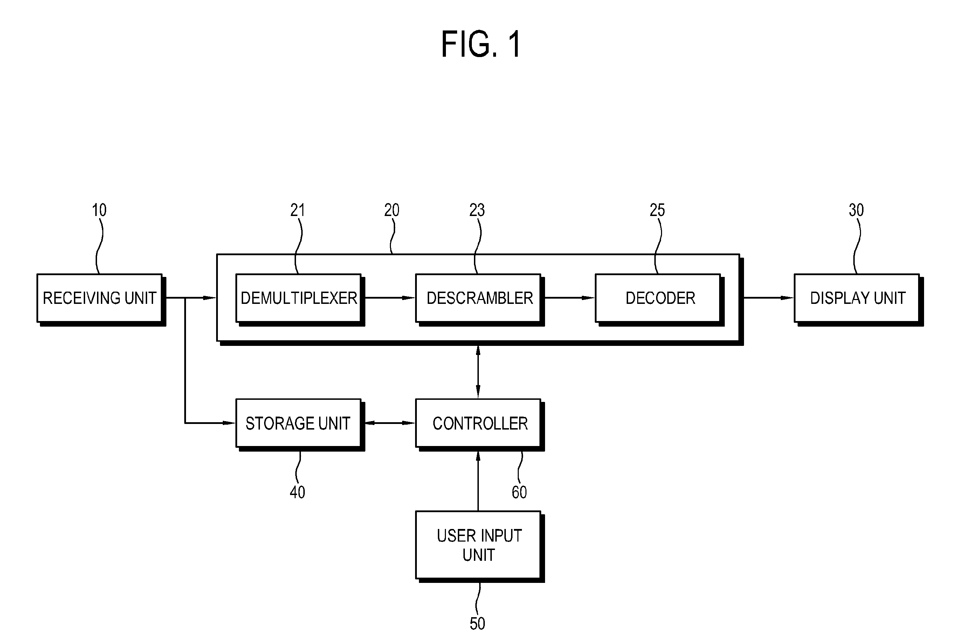

FIG. 1 is a control block diagram of a display apparatus according to an exemplary embodiment of the present invention. As shown in FIG. 1, a display apparatus includes a receiving unit 10, a processing unit 20, a display unit 30, a storage unit 40, a user input unit 50, and a controller 60.

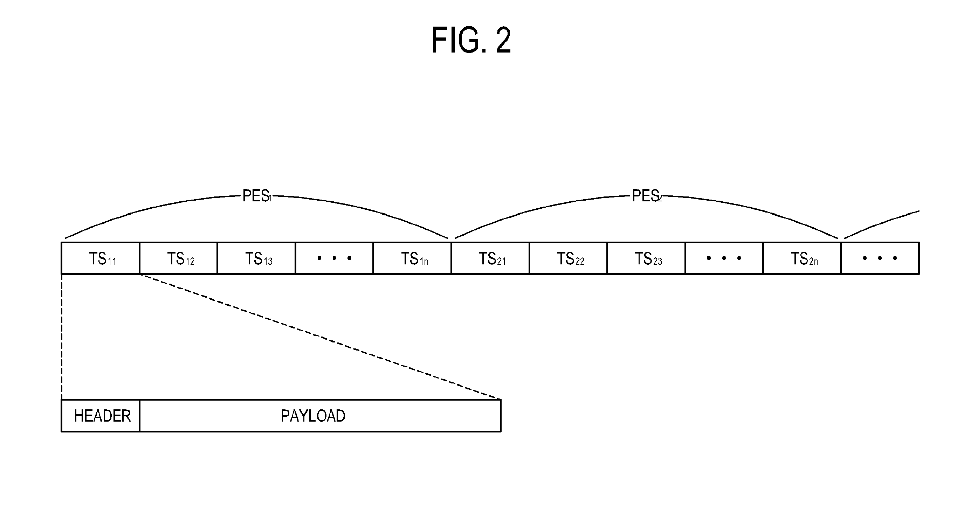

The receiving unit 10 includes a tuner (not shown) to receive a broadcasting signal. The tuner may include a demodulator for demodulating a signal, a decoder, a multiplexer, etc. The tuner is tuned to a channel frequency corresponding to a tuning control signal of the controller 60, and receives the broadcasting signal. The broadcasting signal is separated into various data such as video information, audio information and the like, through time division multiplexing. Referring to FIG. 2, a packetized elementary stream (PES) PES1, PES2,... is separated into a plurality of transport streams (TS) TS11, TS12, TS13, ..., and transmitted in the form of packets. The demodulator processes the received transport stream packets to undergo a vestigial sideband (VSB) demodulating process, an error correction process, or the like, thereby outputting a transport stream (TS).

The transport stream TS11, TS12, TS13, ... includes header information and payload information. The payload information includes various data such as the video data, the audio data, and the like (hereinafter, referred to as 'stream data').

The header information includes information about the stream data included in the payload information, control information, and the like. Further, the header information includes payload unit start identification (PUSI) information. The PUSI information indicates whether or not a first byte of the packetized elementary stream is included in the transport stream. If the transport stream includes the first byte of the packetized elementary stream, the PUSI information of the header information has a value of 1. Thus, the header information involved in the first transport stream TS11, TS12, ... of each packetized elementary stream PES1, PES2,... has a PUSI value of 1.

Further, the payload information includes frame information of the stream data. For high definition picture quality, a digital broadcast generally compresses a video signal according to MPEG standards. Under the MPEG standard, frames are not individually compressed as still images, but are compressed using motion compensation based on a similarity between adjacent frames. To perform the motion compensation, the frame information is stored for recognizing an I frame, a bidirectional coded (B) frame and a P frame, and the display apparatus makes the frames undergo prediction (predictive frame) and interpolation (bidirectional-coded frame) on the basis of the frame information.

The I frame is a frame compressed as a still image, so that the I frame can be restored by its own information. Further, the I frame can be placed at any position of the transport stream, and used for random access of the transport stream. Also, the I frame shows the lowest compression ratio in the MPEG standard. The P frame is only a predictive frame, and is used in encoding only a difference between adjacent frames. At encoding and decoding operations, the P frame uses information about a previous I frame and a previous P frame. The B frame is an interpolated frame, and includes a difference value between the I or P frame previous to the B frame and the I or P frame subsequent to the B frame. At the encoding and decoding operations, the B frame uses both the previous and subsequent I frames and the previous and subsequent P frames.

The processing unit 20 processes the transport stream received through the receiving unit 10 under control of the controller 60, and converts it into a format adapted to be displayed through the display unit 30. According to an exemplary embodiment of the present invention, the processing unit 20 includes a demultiplexer 21, a descrambler 23, and a decoder 25.

The demultiplexer 21 demultiplexes the transport stream and transmits it to the descrambler 23. The demultiplexer 21 checks information included in the header information when demultiplexing the transport stream. The header information includes packet identification (PID) of a packet including the transport stream. The demultiplexer 21 separates and extracts video packetized elementary stream (PES)/ elementary stream (ES) and audio PES/ES from the transport stream and transmits them to the decoder. Further, the demultiplexer 21 checks the PUSI information included in the header information and provides the checked information to the controller 60.

The descrambler 23 descrambles the transport stream which is scrambled and can only be unscrambled by limited users. The descrambler 23 may include a decoding algorithm. Further, the descrambler 23 may comprise a smart card which includes user information for allowing a user to descramble and watch the scrambled transport stream.

The decoder 25 decodes the video PES/ES and the audio PES/ES extracted by the demultiplexer 21 on the basis of time information for synchronizing video information with audio information, thereby generating the video information and the audio information. The decoder 25 may include a video decoder (not shown) for decoding the video PES/ES, and an audio decoder (not shown) for decoding the audio PES/ES.

Meanwhile, the processing unit 20 may have various functions corresponding to the formats of the video information. For example, the processing unit 20 may have an analog-to-digital (A/D) converting function to convert the input video information having various formats into digital video information having a predetermined format; a scaling function to adjust the digital video information and/or the analog video information to have a vertical frequency, a resolution, an aspect ratio, etc. adaptive to the output standards of the display unit 30; and a predetermined format converting function.

The display unit 30 displays an image based on the video information processed by the processing unit 20. Here, the display unit 30 may be variously achieved by a digital light processing (DLP), a liquid crystal display (LCD), a plasma display panel (PDP), etc.

The storage unit 40 may include a HDD or the like to store the transport stream received through the receiving unit 10. Further, the storage unit 40 stores an address, in which the transport stream having a PUSI value of '1' is stored, as index information.

The user input unit 50 allows a user to select a screen searching function for searching a screen while playing back the transport stream, stored in the storage unit 40, forward and backward at high speed. Further, the user input unit 50 allows a user to set up a searching speed of the screen searching function. Also, the user input unit 50 may include a menu key provided in a remote controller or the like, and a key signal generator to generate a key signal corresponding to key manipulation. In addition, the user input unit 50 includes a function key to select functions provided in the display apparatus, or the like.

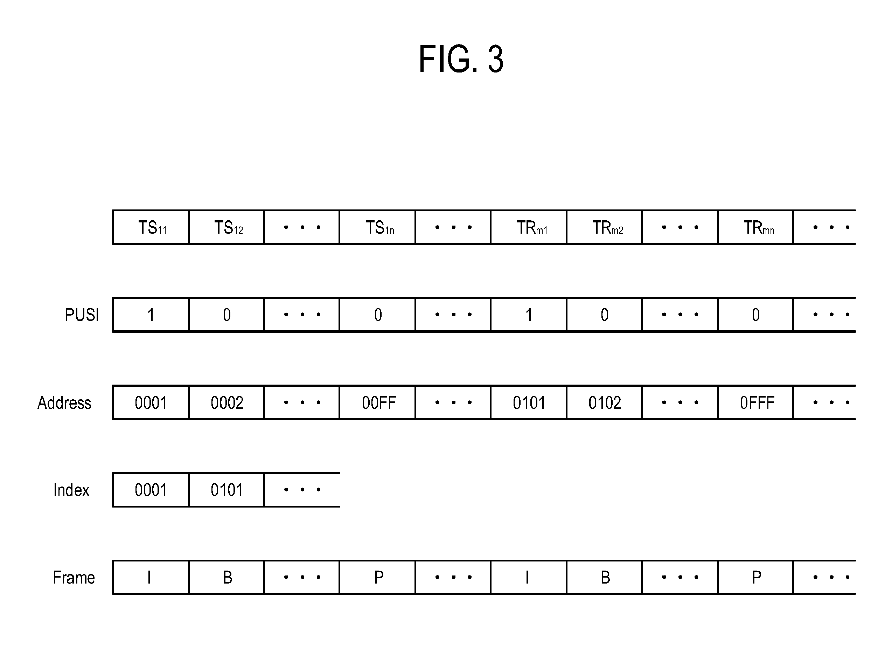

The controller 60 may be achieved by a central processing unit (CPU), a microcomputer, or the like to control the transport stream stored in the storage unit 40 to be played back at the high speed when the screen searching function is selected. Referring to FIG. 3, the controller 60 controls the received transport streams TS11, TS12, ..., TS1N, TSM1, TSM2, ..., TSMN, ... to be sequentially stored in the storage unit 40. The transport streams are stored in the storage unit 40 independently of being processed by the processing unit 20. The controller 60 stores the index information of a transport stream when a transport stream is stored. That is, the controller 60 controls the demultiplexer 21 to check the PUSI information included in the header information and to generate an address, in which a transport stream TS11, TSM1, ... having a PUSI value of '1' is stored, as index information 0001, 0101, ....

The controller 60 checks the index information 0001, 0101, ... when the screen searching function is selected through the user input unit 50. The controller 60 searches the storage unit 40 on the basis of the index information 0001, 0101, .... In other words, the controller 60 searches the address of the storage unit 40 corresponding to the index information 0001, 0101, ..., and checks the transport streams TS11, TSM1, ... stored at the address.

Here, the screen searching function includes a fast forward (ff) function and a rewind (rew) function. When the fast forward function is selected, the controller 60 searches the transport stream in order of the index information (0001, 0101, ...) as stored from a certain point of time. On the other hand, when the rewind function is selected, the controller 60 searches the transport stream in a reverse order of the index information (..., 0101, 0001) as stored from the current point of time.

Then, the controller 60 controls the descrambler 23 to descramble the searched transport stream TS11. In case of a scrambled stream, the descrambler 23 may check the payload information. The controller 60 checks the frame information included in the payload information of the descrambled transport stream TS11. As shown in FIG. 3, the frame information of the transport stream TS11 is the I frame. The controller 60 determines whether the checked frame information corresponds to a preset reference frame. In other words, the controller 60 checks whether the checked frame information is equal to the frame information preset as a reference frame. If the checked frame information corresponds to the reference frame, the transport stream TS11 is transmitted to and processed in the processing unit 20. Here, the transport stream TS11 transmitted to the processing unit 20 is processed through the demultiplexer 21, the descrambler 23, the decoder 25 and the like and then output to the display unit 30.

The controller 60 may set up the reference frame according to the searching speed set by a user. The searching speed may include a double speed, a triple speed, a quadruple speed, and so on. The controller 60 sets up the reference frame on the basis of the searching speed set up by the user input unit 50. For example, if the searching speed is equal to or higher than an octuple speed, the controller 60 sets up the I frame as the reference frame, so that the screen can be searched at high speed. Thus, the transport stream TR11, TRM1, ... including the I frame is processed and displayed. On the other hand, if the searching speed is lower than the octuple speed, the controller 60 sets up at least one of the B frame and the P frame along with the I frame as the reference frame. When the searching speed is lower than the octuple speed, a displaying interval between the frames becomes narrower as compared with that of the octuple speed or higher. Thus, time difference between the screens to be searched is decreased, thereby enabling more detailed search.

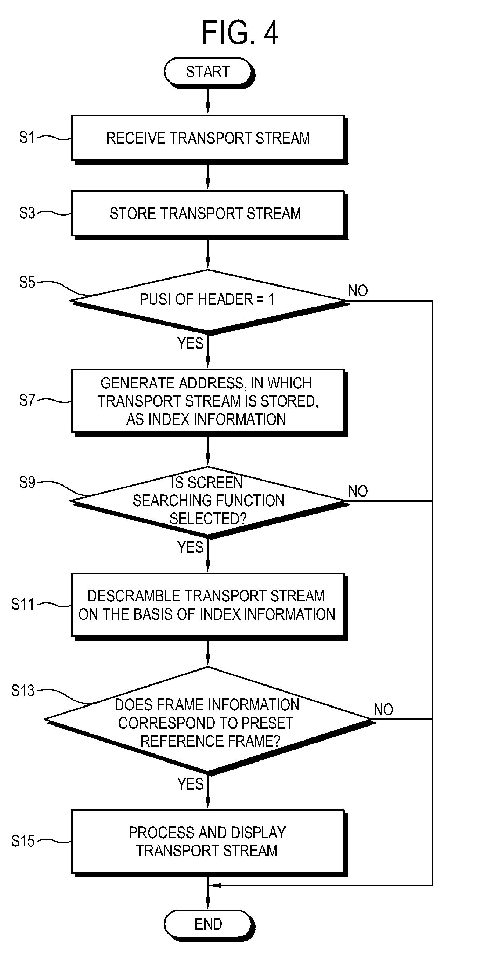

Below, a control method of a display apparatus according to an exemplary embodiment of the present invention will be described with reference to FIG. 4.

As shown in FIG. 4, when the transport stream is received at operation S1, it is stored in the storage unit 40 at operation S3. At the same time, the received transport stream is processed by the processing unit 20.

Further, the controller 60 checks the PUSI information of the header information when the transport stream is stored. If it is determined that the PUSI value is of '1' at operation S5, the controller 60 generates the address, in which the transport stream is stored, as the index information at operation S7.

Meanwhile, when the screen searching function is selected at operation S9, the transport stream stored in the storage unit 40 is descrambled by the descrambler 23 on the basis of the index information at operation S11.

Further, the frame information included in the payload information of the descrambled transport stream is checked. If it is determined that the frame information corresponds to the preset reference frame at operation S13, the frame information is processed and displayed at operation S15.

Accordingly, the screen searching function is enabled even though the transport stream is scrambled. Further, the index information is generated on the basis of the PUSI information included in the header information of the transport stream, so that the frame information can be determined with reference to the index information.

Further, the screen searching function is enabled regardless of whether the transport stream is scrambled or not, thereby enhancing convenience for a user.

As described above, exemplary embodiments of the present invention provide a display apparatus and a control method thereof, in which the screen searching function is enabled even though the transport stream is scrambled.

Further, exemplary embodiments of the present invention provide a display apparatus and a control method thereof, in which the index information is generated on the basis of the PUSI information included in the header information of the transport stream, so that the frame information can be determined with reference to the index information.

Also, exemplary embodiments of the present invention provide a display apparatus and a control method thereof, in which the screen searching function is enabled regardless of whether the transport stream is scrambled or not, thereby enhancing convenience for a user.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling a display apparatus, the method comprising:
receiving a transport stream (TS11-13) comprising payload unit start identification, PUSI information;
storing the transport stream (TS11-13);
checking frame information of the transport stream (TS11-13) by descrambling the transport stream (TS11-13) if a screen searching function is selected and then the PUSI information is '1' ; and
processing and displaying the transport stream (TS11-13) if the frame information corresponds to a preset reference frame.

2. The method according to claim 1, further comprising generating and storing an address, in which the transport stream (TS11-13) having the PUSI information of '1' is stored, as index information,
wherein the checking the frame information comprises descrambling the transport stream (TS11-13) based on the index information.

3. The method according to claim 2, wherein the reference frame comprises an intra-coded frame.

4. The method according to claim 2, further comprising setting a searching speed of the screen searching function;
setting the reference frame depending on the searching speed.

5. The method according to claim 1, further comprising setting a searching speed of the screen searching function.

6. The method according to claim 5, further comprising setting the reference frame depending on the searching speed.

7. A display apparatus comprising:
a receiving unit (10) which receives a transport stream (TS11-13)comprising payload unit start identification, PUSI information;
a storage unit (40) which stores the transport stream (TS11-13) ;
a processing unit (20) which descrambles the transport stream (TS11-13) if the transport stream (TS11-13) is scrambled; and
a controller (60) which controls the processing unit (20) to descramble the transport stream (TS11-13) if a screen searching function is selected and then the PUSI information is '1', and processes the transport stream (TS11-13) if the frame information of the transport stream (TS11-13) corresponds to a preset reference frame.

8. The display apparatus according to claim 7,
wherein the controller (60) controls the processing unit (20) to generate an address, in which the transport stream (TS11-13) having the PUSI information of '1' is stored, as index information; stores the index information in the storage unit (40); and controls the processing unit (20) to descramble the transport stream (TS11-13) based on the index information.

9. The display apparatus according to claim 8,
wherein the reference frame comprises an intra-coded frame.

10. The display apparatus according to claim 8, further comprising a user input unit for setting a searching speed of the screen searching function.

11. The display apparatus according to claim 10,
wherein the controller (60) sets the reference frame depending on the searching speed set through the user input unit.

12. The display apparatus according to claim 11,
wherein the controller (60) sets the intra-coded frame as the reference frame if the searching speed is a normal speed, and sets a predictive-coded frame as the reference frame if the searching speed is equal to or higher than a double speed.

13. The display apparatus according to claim 7, further comprising a user input unit (50) for setting a searching speed of the screen searching function.

14. The display apparatus according to claim 13,
wherein the controller (60) sets the reference frame depending on the searching speed set through the user input unit (50).

15. The display apparatus according to claim 14,
wherein the controller (60) sets the intra-coded frame as the reference frame if the searching speed is a normal speed, and sets a predictive-coded frame as the reference frame if the searching speed is equal to or higher than a double speed.
